(19) Europäisches Patentamt
European Patent Office
Office européen des brevets

(11) **EP 2 333 518 B1**

(12) **EUROPÄISCHE PATENTSCHRIFT**

(45) Veröffentlichungstag und Bekanntmachung des Hinweises auf die Patenterteilung:
**05.03.2014 Patentblatt 2014/10**

(51) Int Cl.:
***G01N 17/02*** *(2006.01)*

(21) Anmeldenummer: **10015499.6**

(22) Anmeldetag: **10.12.2010**

(54) **Korrosionsschutzprüfung erdgedeckter Strukturen**

Anti-corrosion test for subsurface structures

Contrôle de la protection anticorrosion des structures souterraines

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.12.2009 DE 102009059036**

(43) Veröffentlichungstag der Anmeldung:
**15.06.2011 Patentblatt 2011/24**

(73) Patentinhaber: **TSG Technische Service Gesellschaft mbH**
**99096 Erfurt (DE)**

(72) Erfinder:
• **Hesse, Olaf**
**99734 Nordhausen (DE)**
• **Nagel, Andreas**
**99765 Heringen (DE)**

(74) Vertreter: **Schwahn, Hartmut et al**
**Gleiss Grosse Schrell & Partner**
**Patentanwälte Rechtsanwälte**
**Leitzstraße 45**
**70469 Stuttgart (DE)**

(56) Entgegenhaltungen:
**EP-A1- 0 465 347      WO-A1-02/103330**
**US-A- 5 674 375**

• **N D Cogger ET AL: "An introduction to electrochemical impedance measurement", , 1. Mai 1999 (1999-05-01), XP55030878, Gefunden im Internet: URL:http://www.korozja.pl/html/eis/ technot e06.pdf [gefunden am 2012-06-25]**
• **BARADEL O ET AL: "Comparison of corrosion rates evaluated from polarisation resistance and electrochemical impedance spectroscopy measurements", 19940101, 1. Januar 1994 (1994-01-01), Seiten 8/1-810, XP006527100,**

## Beschreibung

Die Erfindung betrifft Verfahren zur Prüfung des Korrosionsschutzes und des Korrosionszustandes erdgedeckter oder teilerdgedeckter metallischer Prüfobjekte mit Korrosionsschutzumhüllung, besonders die Beurteilung der Korrosionsgefährdung von Druckbehältern oder Druckleitungen, anhand von Wechselstromparametern.

In das Erdreich teilweise eingebrachte oder eingegrabene metallische Objekte sind regelmäßig der Korrosion ausgesetzt. Korrosion führt allgemein zur mechanischen Schwächung des metallischen Objekts, insbesondere auch zu lokalem "Lochfraß". Dies ist besonders kritisch bei erdgedeckten oder teilerdgedeckten Druckbehältern oder Druckleitungen, beispielsweise Flüssiggasbehälter, besonders Propangasbehälter.

Unter "Korrosion" wird vorliegend vornehmlich die elektrochemische Korrosion in Form einer physikalisch chemischen Wechselwirkung zwischen dem Metall des Prüfkörpers und seiner Umgebung verstanden, die zu einer Veränderung der Eigenschaften des Metalls führt. Dadurch bedingt sind erhebliche Beeinträchtigungen der Funktion des Prüfkörpers. Die Korrosionsreaktion läuft zwischen mindestens zwei Reaktionspartnern auf, die ein Redoxpaar bilden. Ein Maß für die Geschwindigkeit der elektrochemischen Reaktion ist die Anzahl der geladenen Teilchen und deren Beweglichkeit für den Ladungsausgleich im Redoxpaar. Dieser Ladungsausgleich findet für die meisten Korrosionsprozesse zwischen unterschiedlichen Phasen über Phasengrenzen hinweg statt. Diese Phasen bestehen zum einem aus metallischen Werkstoffen und zum anderen überwiegend aus einem wässrigen Korrosionsmedium mit elektrischen Ladungsträgern (Elektrolyt).

Für die Korrosion im Erdreich gelagerter metallischer Objekte ist die Korrosivität des Lagermediums (des Erdreichs) von vorrangiger Bedeutung. Beispielsweise kann eine durch Makroelementbildung zwischen Stahlbeton, der als Kathode wirkt, und dem metallenen Prüfobjekt, das als Anode wirkt, eine geförderte Korrosion auftreten. Diese ist in besonderem Maße vom Elektrolytwiderstand des Lagermediums (Erdreich) abhängig. Damit stellt im Allgemeinen die Beurteilung des Erdbodens ein wichtiges Bewertungskriterium bei der Bewertung von im Erdreich gelagerten Prüfobjekten, beispielsweise Druckbehältern, dar. Für die Erdbodenkorrosion bestimmende Faktoren sind vor allem die Porosität (Durchlüftung), die elektrolytische Leitfähigkeit, der Gehalt an gelösten Salzen, der Feuchtigkeitsgehalt und die Azidität (pH-Wert) des Bodens. Ein poröser Boden kann Feuchtigkeit längere Zeit speichern und gestattet einen maximalen Luftzutritt (Sauerstoffkorrosion).

Zur Vermeidung von Korrosion sind diese Objekte bekanntermaßen mit Schutzbeschichtungen versehen, die das metallische Objekt chemisch und elektrisch vom umgebenden Erdreich isolieren sollen. Bekannte Korrosionsschutzumhüllungen sind Bitumenbeschichtungen und Kunststoffbeschichtungen, vornehmlich aus Epoxydharz. Obwohl solche Kunststoff- oder Harzbeschichtungen eine höhere mechanische Widerstandsfähigkeit aufweisen, können auch dort Risse oder Fehlstellen auftreten, wodurch es zu zumindest lokalen Korrosionserscheinungen kommt. Für sicherheitsrelevante Objekte, vor allem für Druckbehälter wie Flüssiggaslagertanks, sind wiederkehrende Prüfungen zur Beurteilung der Korrosionsgefährdung und des Zustands der Korrosionsschutzumhüllung vorgesehen, um deren Betriebssicherheit zu gewährleisten und zu erhalten. Wird dabei eine Korrosionsgefährdung festgestellt, so kann diese beispielsweise durch Reparatur der Korrosionsschutzumhüllung und/oder durch Anbringen eines dauerhaften kathodischen Korrosionsschutzes (KKS) beseitigt beziehungsweise kompensiert werden. Bei sicher als korrosionsgefährdet eingestuften Druckbehältern ist der (nachträgliche) Aufbau einer KKS-Anlage zwingend vorgeschrieben. Aufbau und Betrieb solcher Anlagen sind jedoch aufwändig und mit laufenden Betriebskosten verbunden; die Verordnung einer KKS-Anlage rein auf Verdacht hin soll daher vermieden werden. Es besteht daher der Wunsch nach besser objektivierbaren Prüfverfahren, die sicherere Kriterien für die Beurteilung der Korrosionsgefährdung dieser Prüfobjekte bereitstellen.

Die Beurteilung der Korrosionsgefährdung von Prüfobjekten wie erdgedeckten Druckbehältern erfolgt bisher nach den technischen Regeln zur Druckbehälterverordnung (TRB) des Hauptverbandes der gewerblichen Berufsgenossenschaften e.V., insbesondere TRB 600 und 601. Die TRB 601 sieht dazu vor, die Korrosionsgefährdung mit elektrischen Mitteln zu bestimmen. Untersuchte Einflussgrößen, aus denen die Korrosionsgefährdung abgelesen werden soll, sind vor allem der spezifische Bodenwiderstand des umgebenden Erdreichs, die elektrische Homogenität des Erdbodens, das elektrische Druckbehälter/Boden-Potential, die Abschätzung von Streustromeinflüssen durch umgebende Objekte und der Ausbreitungswiderstand im Erdreich. Den Einflussgrößen werden bekanntermaßen sogenannte Kennzahlen zugeordnet. Beträgt die Summe der Kennzahlen 18 oder mehr, so wird gemäß TRB 601 der Druckbehälter als korrosionsgefährdet eingestuft und zum weiteren Betrieb eine KKS-Anlage gefordert. Die Bestimmung aller Einflussgrößen gemäß TRB 601 ist technisch aufwändig und mit einer Reihe messtechnischer Unsicherheiten und Unklarheiten behaftet. So zeigt sich, dass einige dieser Einflussgrößen nur bedingt Rückschlüsse auf die tatsächliche Korrosionsgefährdung erlauben. Das bekannte Prüfverfahren ist deshalb verbesserungswürdig. Daneben wäre eine Vor-Kategorisierung der Prüfobjekte in eindeutig korrosionsgefährdete, potentiell korrosionsgefährdete und sicher nicht korrosionsgefährdete Prüfobjekte, die schnell und sicher durchgeführt werden kann, zur Vermeidung und/oder zur Verbesserung der Aussage der aufwändigen Prüfung von weiteren Einflussgrößen wünschenswert. Der Prüfaufwand gemäß TRB 601 könnte dann nur auf diejenigen Prüfobjekte beschränkt werden, die in einer solchen Vorprüfung als potentiell korrosionsgefährdet eingestuft wurden.

Aus der US 5,674,375 A ist bereits ein Verfahren zum Erfassen der Korrosionsgefährdung einer im Erdreich gebetteten Stahlkonstruktion bekannt, bei welcher eine Impedanzspektroskopie durchgeführt und ein Nyquist-Plot ausgewertet wird.

Aus N.D. Kogger et al. "An introduction to electrochemical impedanz measurement" (1999-05-01) und Baradell O. et al. "Comparison of corrosion rates evaluated from polarisation resistance and electrochemical impedanz spectroscopy measurements" (1994-01-01, Seiten 8/1 bis 8/10), EP 0465347 A1 und WO 02/103330 A1 sind weiterhin Verfahren bekannt, bei welchen ein Widerstand zur Bestimmung einer Korrosion oder eines Korrosionszustandes genutzt wird.

Der Erfindung liegt die Aufgabe zugrunde, verbesserte Verfahren und Mittel zur Prüfung oder Vorprüfung der Korrosionsschutzumhüllung und zur Beurteilung der Korrosionsgefährdung eines erdgedeckten oder teilerdgedeckten metallischen Prüfobjekts bereitzustellen, die mit geringem Aufwand einsetzbar sind und eine sichere Beurteilung ermöglichen. Die Erfindung hat sich auch zur Aufgabe gestellt, die als nachteilig oder verbesserungswürdig bekannten Prüfverfahren zur Beurteilung des Korrosionszustandes von Druckbehältern (TRB 601) ganz oder teilweise zu ersetzen, um den Prüfaufwand zu vermindern und/oder das Prüfergebnis zu verbessern.

Die Erfindung löst dieses technische Problem vollständig durch Bereitstellung eines Verfahrens zur Bestimmung der Korrosionsgefährdung eines in Erdreich gebetteten metallischen Prüfobjekts mit Korrosionsschutzumhüllung, das in Anspruch 1 dargestellt ist und erfindungsgemäß zumindest die nachfolgenden Schritte enthält, die bevorzugt ohne weitere Zwischenschritte und bevorzugt unmittelbar hintereinander ausgeführt werden:

a) Es wird eine frequenzveränderliche Wechselspannung $U(\omega)$ über eine von dem Prüfobjekt und dem das Prüfobjekt umgebenden Erdreich gebildete Messstrecke angelegt;
b) der dadurch der Messstrecke eingeprägte Strom $I(\omega)$ wird ermittelt;
c) der komplexe Widerstand der Messstrecke (Impedanz) Z(w) in Anhängigkeit von der Frequenz der angelegten Wechselspannung U(w):

$$Z(\omega) = U(\omega) / I(\omega) \qquad\qquad (1)$$

wird ermittelt und registriert (Impedanzspektroskopie);
d) als erstes Prüfkriterium wird der ohmsche Serienwiderstand der Korrosionsschutzumhüllung $R_U$ des Prüfobjekts aus den registrierten Impedanzwerten Z(w) ermittelt, wobei die Unterschreitung eines Grenzwerts $R_U min$ eine potentiell fehlerhafte Korrosionsschutzumhüllung und eine potentielle Korrosionsgefährdung des Prüfobjekts anzeigt.

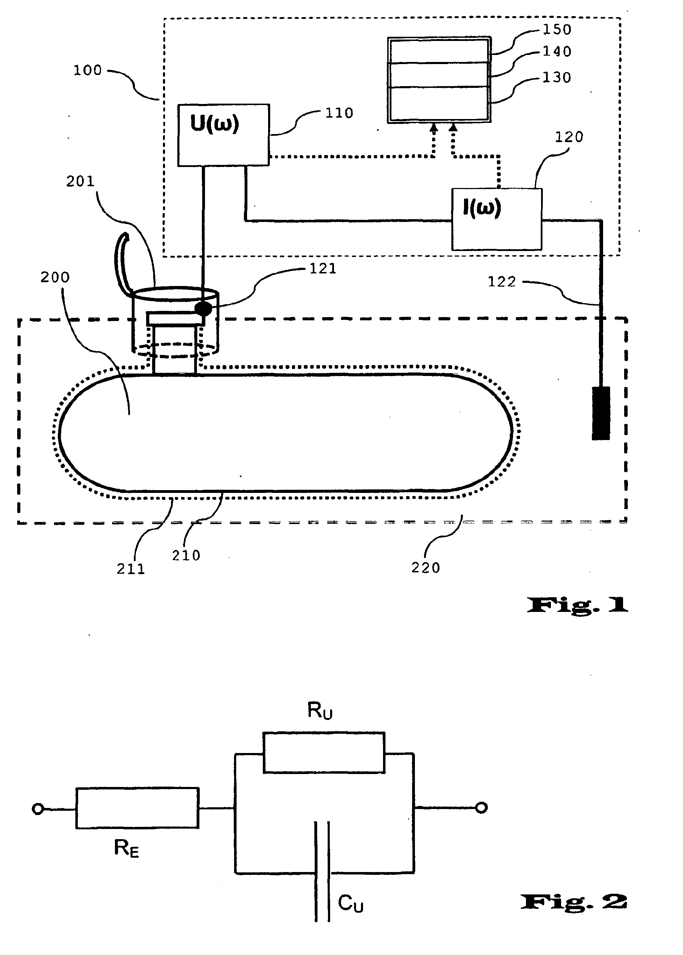

Ein idealer Prüfkörper mit fehlerfreier, intakter Beschichtung, das heißt ein sicher korrosionsgeschützter Prüfkörper, wird gemäß der Erfindung mit dem in Figur 2 dargestellten Ersatzschaltbild beschrieben. Die Erfinder fanden überraschend, dass der ermittelte ohmsche Serienwiderstand $R_U$ als ein erstes Prüfkriterium für die Beurteilung der Integrität der Korrosionsschutzumhüllung und damit für die Beurteilung der Korrosionsgefährdung des Prüfobjekts unmittelbar herangezogen werden kann. Die Erfindung macht sich die Erkenntnis zunutze, dass für die Beurteilung der Korrosionsgefährdung hauptsächlich der ohmsche Anteil der Fehlerstelle der Korrosionsschutzumhüllung ausschlaggebend ist. Der ohmsche Widerstand einer Fehlstelle liegt parallel zum Gesamtwiderstand $R_U$ der Korrosionsschutzumhüllung. Er ist gegenüber dem Widerstand einer intakten Korrosionsschutzumhüllung klein. Folglich reduziert die niederohmige Fehlstelle den Gesamtwiderstand der Korrosionsschutzumhüllung erkennbar.

Die Erfinder fanden überraschend, dass mittels der Methode der Impedanzspektroskopie auch auf einfache Weise der ohmsche Serienwiderstand der Korrosionsschutzumhüllung des Prüfobjekts ermittelt werden kann. Bei bekannten Gleichspannungsmessungen kann nur die Summe von Umhüllungswiderstand $R_U$ und Ausbreitungswiderstand $R_E$ ermittelt werden. Nutzt man hingegen erfindungsgemäß Wechselspannungssignale zur Messung, können alle Parameter dieses Ersatzschaltbildes getrennt bestimmt werden. Dafür werden erfindungsgemäß Wechselspannungssignale über die aus Prüfkörper und dem Erdreich (Erdelektrode) gebildete Messstrecke angelegt. Die Frequenz der Wechselspannung wird vorzugsweise beginnend bei höheren Frequenzen bis zur niedrigsten Frequenz durchlaufen. Für jeden Frequenzwert werden Amplitude und Phase des Einspeisestroms bestimmt. Aus diesen Werten können die Werte für die Behälterkapazität $C_U$, den Umhüllungswiderstand $R_U$ und den Bodenausbreitungswiderstand $R_E$ unter Nutzung eines Algorithmus zur Kurvenanpassung bestimmt werden.

Eine Unterschreitung eines typischen und für das jeweilige Prüfobjekt mit Korrosionsschutzumhüllung vorbestimmten Minimalwerts $R_U min$ wird gemäß der Erfindung unmittelbar als Fehler in der Integrität der Korrosionsschutzumhüllung bewertet. Eine Korrosionsschutzumhüllung mit "fehlerhafter Integrität" ist erfindungsgemäß eine Korrosionsschutzumhüllung mit mindestens einer Fehlstelle, Undichtigkeit, Riss oder ähnlichem, wodurch der Korrosionsschutz des Prüfobjekts nicht mehr gewährleistet ist.

Die Ermittlung und Beurteilung des ohmschen Serienwiderstands der Korrosionsschutzumhüllung erlaubt auf einfache Weise einen verlässlichen Rückschluss auf die Korrosionsgefährdung des Prüfobjekts. Zur Ermittlung von $R_U$ und vorzugsweise zusätzlich $C_U$ und/oder $R_E$ sieht die Erfindung also vor, den Frequenzgang der Impedanz Z(w) (Impedanzverlauf) der Messstrecke zu ermitteln. Für jeden Frequenzwert der Wechselspannung U(w) werden Amplitude und Phase des Einspeisestroms I($\omega$) bestimmt. Aus der Impedanz Z(w) können die Werte für die Behälterkapazität $C_U$, den Umhüllungswiderstand $R_U$ und den Bodenausbreitungswiderstand $R_E$ bevorzugt unter Nutzung des Ersatzschaltbildes und bevorzugt unter Anwendung eines Algorithmus zur Kurvenanpassung bestimmt werden. Eine besonders anschauliche Darstellung des Impedanzverlaufs Z($\omega$) ergibt sich im sogenannten Nyquist-Plot, bei dem Wirk- und Scheinwiderstand in Abhängigkeit von der Frequenz als Kurvenzug in der Impedanzebene dargestellt werden. Für das Ersatzschaltbild eines idealen Prüfkörpers mit intakter Korrosionsschutzumhüllung (Figur 2) ergibt sich ein im Wesentlichen halbkreisförmiger Kurvenzug. Der Umhüllungswiderstand $R_U$ und der Ausbreitungswiderstand $R_E$ können vorzugsweise direkt aus dem Nyquist-Diagramm "abgelesen" werden, und zwar an den extrapolierten Schnittpunkten mit der Realachse.

Die Erfindung soll im Folgenden näher erläutert werden. Im Zusammenhang mit der Erfindung wird von folgenden an sich bekannten Zusammenhängen und Definitionen ausgegangen: Die Impedanz eines elektrischen Elements oder einer Messstrecke kann aus Widerständen, Kondensatoren und Induktivitäten oder aus einer Kombination mehrerer dieser Komponenten in Parallel- und/oder Reihenschaltung bestehen. Die Impedanz, das heißt der komplexe Wechselstromwiderstand, ist eine imaginäre Zahl. Im Allgemeinen gilt

$$Z(\omega) = R + j \cdot X(\omega) \qquad (3)$$

wobei X die Reaktanz, das heißt der Imaginärteil der Impedanz = Im(Z), und R der reale ohmsche Widerstand, das heißt der Realteil der Impedanz = Re(Z), ist. Bei zunehmender Frequenz sinkt eine kapazitive Reaktanz, während eine induktive Reaktanz ansteigt. Die Gesamtimpedanz ist daher als Funktion der Frequenz (Z($\omega$)) zu beschreiben. Zur Untersuchung einer Impedanz eines Elements oder einer Messstrecke wird das System mit einer Wechselspannung U($\omega$) beaufschlagt, die durch die Amplitude $U_0$ und die Kreisfrequenz $\omega$ ($\omega = 2\pi \cdot f$) charakterisiert ist:

$$U(\omega) = U_0 \cdot \sin(\omega\, t) \qquad (4)$$

Dadurch wird in dem System ein Wechselstrom I($\omega$) eingeprägt, der gegenüber der Spannung um einen Phasenwinkel $\varphi$ verschoben ist:

$$I(\omega) = I_0 \cdot \sin(\omega\, t + \varphi) \qquad (5)$$

$$Z(\omega) = \frac{U(\omega)}{I(\omega)} \qquad (6)$$

$$Z(\omega) = Z_0 \cos \varphi - j\, Z_0 \sin \varphi \qquad (6a)$$

Zur Modellierung der Verhältnisse in der Messstrecke sieht die Erfindung nun vor, diese durch wenige einfache Elemente wie Widerstand und Kapazität zu beschreiben, wobei eine geeignete Kombination dieser Elemente in Parallel- oder Serienschaltung gewählt wird.

Um das dynamische Verhalten der Messstrecke graphisch darzustellen und anhand der Prüfkriterien auszuwerten, sieht die Erfindung bevorzugt vor, die Realteile Re(Z) und Imaginärteile Im(Z) der komplexen Impedanz gegeneinander in Form einer Ortskurve aufzutragen. Diese Ortskurve ist als Nyquist-Diagramm oder Nyquist-Plot bekannt. Im Nyquist-Diagramm wird bei Impedanzen mit überwiegend kapazitiven Anteilen zur besseren Darstellbarkeit die negative Imaginärachse bevorzugt nach oben aufgetragen.

Als gleichwertige Alternative sieht die Erfindung bevorzugt vor, den Betrag |Z| und den Phasenwinkel $\varphi$ der Impedanz jeweils gegen die Frequenz, besonders gegen den Logarithmus der Frequenz aufzutragen. Diese Darstellung ist als Bode-Diagramm oder Bode-Plot bekannt. Beide graphischen Darstellungen sind ineinander überführbar, dabei gilt:

$$Re(Z) = |Z| \cos \varphi \qquad (7a)$$

$$Im(Z) = |Z| \sin \varphi \qquad (7b)$$

$$|Z| = \sqrt{Re(Z)^2 + Im(Z)^2} \qquad (8a)$$

$$\varphi = \arctan \frac{Im(Z)}{Re(Z)} \qquad (8b)$$

Im Folgenden wird die Durchführung des Prüfverfahrens näher erläutert: Vorzugsweise wird die Wechselspannung U(ω) im erfindungsgemäßen Verfahren zwischen mindestens einem metallenleitenden Kontakt am Prüfobjekt und mindestens einer in der Umgebung des Prüfobjekts im Erdreich platzierten Erdelektrode (Erdspieß) angelegt. Die Kontaktstelle am Prüfkörper ist in an sich bekannter Weise ausgestaltet. Im Falle eines erdgedeckten Druckbehälters als Prüfobjekt ist die Kontaktstelle zumindest im Bereich des Domschachtes lokalisiert.

Bevorzugt beträgt die Amplitude der in die Messkette eingespeisten Wechselspannung von 0,1 bis 10 V, bevorzugt aber 1 V und/oder mehr, oder bevorzugt 10 V oder weniger. Im Zusammenhang mit der Erfindung wurde insbesondere festgestellt, dass Spannungen oberhalb 10 V die Prüfaussage verschlechtern können, da Durchschläge an Fehlstellen übermäßig auftreten können. In einer Ausgestaltung beträgt die Wechselspannung 5,5 $V_{eff}$.

Die erfindungsgemäß eingesetzte Wechselspannungsquelle ist bevorzugt in der Lage, eine in der Frequenz veränderbare Wechselspannung zu erzeugen. Besonders bevorzugt weist die Wechselspannungsquelle zumindest einen Signalgenerator und/oder Frequenzgenerator, besonders bevorzugt einen spannungsgesteuerten Oszillator (VCO), auf. Zur Erzeugung ausreichend hoher Einspeiseströme weist die Wechselspannung vorzugsweise eine niedrige Eigenimpedanz und/oder einen geringen Innenwiderstand auf. Dies wird schaltungstechnisch bevorzugt durch eine Stromverstärkerendstufe realisiert. Vorzugsweise ist die Wechselspannungsquelle batteriebetrieben oder zumindest über an sich bekannte Maßnahmen vom Lichtstromnetz galvanisch isoliert.

Zur Ermittlung des Frequenzgangs wird das System allgemein bevorzugt mit einer sinusförmigen Wechselspannung mit variabler Frequenz angeregt. Die Ausgangsgröße I(ω) des Systems ist ebenfalls wieder im Wesentlichen sinusförmig mit gleicher Kreisfrequenz, weist jedoch eine andere Amplitude und/oder eine Phasenverschiebung gegenüber dem Eingangssignal auf.

Die Wechselspannung weist also bevorzugt einen periodischen und bevorzugt im Wesentlichen sinusförmigen Verlauf auf. Bevorzugt beträgt die Frequenz der Wechselspannung, insbesondere die Grundfrequenz, 0,1 Hz bis 5.000 Hz. Besonders bevorzugt beträgt die obere Grenzfrequenz 3.000 Hz. Besonders bevorzugt wird als untere Grenzfrequenz 1 Hz, vorzugsweise 0,3 Hz, eingesetzt. Im Zusammenhang mit der Erfindung wurde insbesondere festgestellt, dass bei tieferen Frequenzen, insbesondere kleiner 0,1 Hz, am Prüfobjekt Polarisationseffekte auftreten, die die Aussagekraft der elektrischen Messung mindern können. Die zur Messung eingesetzte Wechselspannung ist daher bevorzugt frei von Gleichspannungsanteilen.

Bevorzugt werden diskret gewählte Frequenzen, beispielsweise in Doppeloktav-, Oktav- oder Halboktavschritten, gewählt. In einer alternativen Variante wird die Frequenz der periodischen Wechselspannung im Wesentlichen kontinuierlich durchgestimmt. Die Frequenz der Wechselspannung wird vorzugsweise beginnend bei höheren Frequenzen bis zur niedrigsten Frequenz durchlaufen. Für jeden Frequenzwert werden Amplitude und Phase des Einspeisestroms bestimmt. Aus diesen Werten können die Werte für die Behälterkapazität $C_U$, den Umhüllungswiderstand $R_U$ und den Bodenausbreitungswiderstand $R_E$ bevorzugt unter Nutzung eines Algorithmus zur Kurvenanpassung bestimmt werden.

Je nach Art und Weise der konkreten Ausgestaltung des Messsystems und der Datenerfassung kann die Wechselspannung U(w) von einem sinusförmigen oder periodischen Verlauf abweichen. In einer Variante der Erfindung ergibt sich die eingespeiste Wechselspannung als Summe mindestens zweier sich überlagernder periodischer, vorzugsweise sinusförmiger Wechselspannungen. Auf diese Weise können mehrere Frequenzen gleichzeitig bestimmt werden. Der Fachmann kennt die einschlägigen, sich aus dem Fourier-Theorem ergebenden Bedingungen der Signalgenerierung und Signalanalyse. Die Erfindung ist nicht auf die vorstehend dargestellten bevorzugten Maßnahmen zur Ermittlung des Impedanzfrequenzgangs (Impedanzverlauf) beschränkt. Andere an sich bekannte signaltechnische Verfahren können gleichwertig eingesetzt werden, darunter zählen auch die Analyse der Impulsantwort auf eine Sprungfunktion, die Analyse der Antwort auf ein "Maximum Length Sequence Signal" oder die sogenannte "Dual-FFT" Messung durch Kreuzkorrelation oder Spektrumvergleich des Anregungs- und des Resultatsignals.

Als Strommesseinrichtung wird ein an sich bekannter Messwandler, das heißt Strom/Spannungswandler, im einfachsten Fall ein Reihen-(Shunt-)Widerstand in die Messkette eingesetzt. Weitere Varianten sind kapazitive oder induktive Koppelmittel zur Ermittlung des Stromflusses in die Messkette. Es versteht sich, dass das Frequenzverhalten der Strommesseinrichtung bei der erfindungsgemäßen Ermittlung des Impedanzfrequenzgangs gegebenenfalls berücksichtigt oder entsprechend kompensiert wird.

Eine alternative bevorzugte Messanordnung enthält einen Lock-in-Verstärker, der eine geringe untere Grenzfrequenz aufweist. Ein bevorzugtes Beispiel ist das Modell 7225 der Firma Signal Recovery oder vergleichbare Systeme. Der Fachmann kennt entsprechende Komponenten zum Aufbau solcher erfindungsgemäß geeigneter Messanordnungen, wie den AD630, betrieben als synchroner Demodulator (Fa. Analog Devices).

Es versteht sich, dass der Widerstandsgrenzwert $R_U min$ nach den jeweils geltenden Prüfungsanforderungen und Kriterien festgelegt werden kann. Die Erfindung sieht vor, dass ein vorbestimmter minimaler Umhüllungswiderstand $R_U$ nicht unterschritten werden darf. Typischerweise beträgt dieser für einen Flüssiggasbehälter bis max. 3 t Fassungsvermögen 100 kOhm; das heißt im Zusammenhang mit der Prüfung von erdgedeckten Druckgasbehältern als Prüfobjekte erweist sich ein Grenzwiderstand $R_U min$ von 100 kOhm als besonders zweckmäßig, insbesondere für einen Behälter mit circa 4.800 l Fassungsvermögen. In einer bevorzugten Ausführung des erfindungsgemäßen Prüfverfahrens beträgt demgemäß $R_U min = 100$ kOhm. Die Erfindung ist jedoch nicht auf diesen Wert beschränkt; in alternativen Varianten beträgt $R_U min$ vorzugsweise 50 kOhm, 200 kOhm, 500 kOhm oder mehr. Im Zusammenhang mit der Erfindung zeigt sich insbesondere, dass $R_U$, zwar unabhängig von dem konkreten Prüfobjekt, aber abhängig von der Oberfläche der Korrosionsschutzumhüllung, bevorzugt stets zumindest 50 kOhm, besonders bevorzugt 100 kOhm oder mehr betragen soll, um mittels des hierin näher ausgeführten Verfahrens zur Ermittlung von Anomalien der Ortskurve von Z(w) verlässliche Aussagen über die Integrität der Korrosionsschutzumhüllung und/oder das Vorhandensein aktiver Korrosionsstellen zu erhalten. Vor allem können bei einem zu kleinen Umhüllungswiderstand $R_U$ Fehlstellen in der Korrosionsschutzumhüllung und/oder aktive Korrosionsstellen nicht zuverlässig detektiert werden, weil die Auswirkungen von deren komplexen elektrischen Widerständen auf den gemessenen Impedanzverlauf Z(w) teilweise oder vollständig durch den kleinen Parallelwiderstand $R_U$ "verschleiert" werden.

Es versteht sich, dass $R_U$ von der Oberfläche des Behälters (in erster Näherung) linear abhängig ist: Eine doppelt so große Oberfläche (Korrosionsschutzumhüllung) hat einen halb so großen vergleichbaren Umhüllungswiderstand $R_U$ (bei derselben Art und Ausführung der Korrosionsschutzumhüllung) zur Folge. Der Grenzwert $R_U = 100$ kΩ gilt insbesondere für Prüfobjekte mittlerer Größe, das heißt vor allem Behälter mit einem Fassungsvermögen von circa 4.800 l (Standardbehälter). Für kleinere Objekte mit einer kleineren Oberfläche ist der Grenzwert $R_U^*$ entsprechend größer, für größere Objekte ist $R_U$ entsprechend kleiner zu wählen. Es gilt dabei für den konkret zu wählenden, an die Oberfläche angepassten $R_U^*$, der $R_U$ bevorzugt ersetzt:

$$R_U = R_{U\,Standard} = \frac{A_{Standard}}{A_{Prüfobjekt}} \qquad (9)$$

und besonders

$$R_U^* = 100\,k\Omega = \frac{A_{Standard}}{A_{Prüfobjekt}} \qquad (9a)$$

wobei $A_{Standard}$ die Oberfläche eines Prüfobjekts mittlerer Größe und $R_{U\,Standard}$ der zugehörige Grenzwert des Umhüllungswiderstands und $A_{Prüfobjekt}$ die davon abweichende Oberfläche des tatsächlichen Prüfobjekts sind.

Die Erfindung sieht zur Ermittlung von $R_U$ aus den Impedanzwerten $Z(\omega)$ bevorzugt vor, dass $R_U$ über ein erfindungsgemäß gewähltes Ersatzschaltbild eines idealen Prüfobjekts mit intakter Korrosionsschutzumhüllung ermittelt wird, und zwar nach:

$$Z(\omega) = R_E + (R_U \| C_U) \qquad\qquad (2)$$

$$= R_E + \frac{R_U \cdot \left(-j \cdot \dfrac{1}{\omega C_U}\right)}{R_U - \left(j \cdot \dfrac{1}{\omega C_U}\right)} \qquad\qquad (2a)$$

wobei

$Z(\omega)$ der ermittelte Impedanzwert der realen Messstrecke ist,
$R_E$ dem ohmscher Serienwiderstand (Ausbreitungswiderstand) des Erdreichs (Ausbreitungswiderstand) entspricht,
$R_U$ dem ohmschen Serienwiderstand der Korrosionsschutzumhüllung (Umhüllungswiderstand) entspricht und
$C_U$ der Kapazität der Korrosionsschutzumhüllung entspricht, die zu $R_U$ parallel ist.

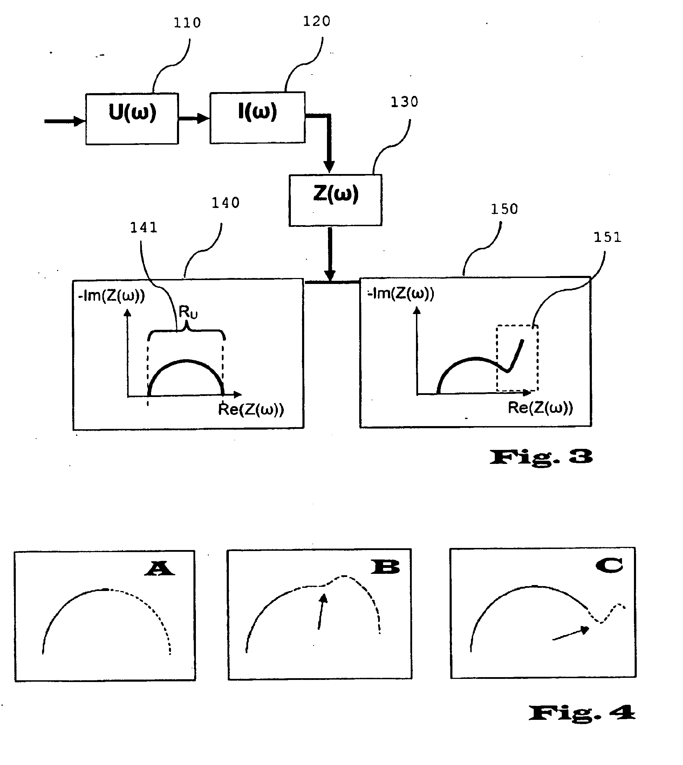

Das dieser Berechnung zugrundeliegende erfindungsgemäß gewählte Ersatzschaltbild der Messstrecke, das vor allem ein in Erdreich eingebettetes metallenes Prüfobjekt mit idealer intakter Korrosionsschutzumhüllung repräsentiert, ist in Figur 2 dargestellt, die zugehörige Berechnungsgrundlage ist in Formel (2) und (2a) dargestellt.
Bevorzugt wird die Impedanz Z über der Frequenz $\omega$ für das jeweilige Amplitudenverhältnis ($U(\omega)/I(\omega)$) und die jeweilige Phasenlage $\varphi$ aufgetragen und bevorzugt als Amplitudengang (Betragsfrequenzgang) bzw. als Phasengang (Phasenfrequenzgang) (Bode-Diagramm) oder durch Realteil (Re(Z)) und Imaginärteil (Im(Z)) über der Frequenz als Laufvariable (Nyquist-Diagramm) dargestellt; es entsteht eine Ortskurve.
In einer bevorzugten Ausführung der Erfindung wird eine Ortskurve jeweils durch Anpassung der Parameter $C_U$, $R_U$ und/oder $R_E$ in Formel (2) und (2a) bevorzugt mathematisch oder bevorzugt graphisch an die reale Ortskurve der gemessenen Impedanzwerte $Z(\omega)$ angepasst (Kurvenanpassung). Dies geschieht bevorzugt mathematisch mit an sich bekannten Anpassungsalgorithmen. Aus der angepassten Kurve wird $R_U$ ermittelt. $R_U$ entspricht dem Betrag der Differenz der Impedanzwerte $Z(\omega 1)$ und $Z(\omega 2)$, wobei bei $Z(\omega 1)$ die Impedanz ist, bei der die Impedanz der Parallelkapazität $C_U(\omega 1)$ gegen Unendlich geht ($R_E(C_U(\omega 1)) \to \infty$, $Im(C_U(\omega 1)) \to 0$), und $Z(\omega 2)$ die Impedanz ist, bei der die Impedanz der Parallelkapazität $C_U(\omega 2)$ gegen Null geht ($R_E(C_U(\omega 2)) \to 0$, $Im(C_U(\omega 2)) \to \infty$). Dies entspricht in der Nyquist-Darstellung den Schnittpunkten ($Z(\omega 1)$ und $Z(\omega 2)$) der im Wesentlichen halbkreis- oder kreissektorförmigen Ortskurve mit der Realachse ($Im(Z) = 0$, $Z(\omega 1) = Re(Z(\omega 1))$, $Z(\omega 2) = Re(Z(\omega 2))$). Das erfindungsgemäße Vorgehen bei der graphischen Analyse der Ortskurve zur Ermittlung von $R_U$ ist in Figur 3 (141) illustriert.
Die Erfinder fanden überraschend, dass das Frequenzverhalten bei Prüfkörpern mit fehlerhafter Korrosionsschutzumhüllung vor allem im Bereich der niederen Frequenzen (Frequenzen < 10 Hz) vom Verhalten eines idealen Prüfkörpers mit intakter Umhüllung abweicht. Aufgrund dieser Abweichungen kann auf das Vorhandensein von Fehlstellen in der Korrosionsschutzumhüllung und gegebenenfalls auf aktive Korrosion geschlossen werden. Neben dem zumindest ersten Prüfkriterium $R_U$ sieht die Erfindung demgemäß bevorzugt vor, zumindest ein weiteres, zweites Prüfkriterium zu erheben, wonach der Verlauf der Impedanz $Z(\omega)$, das heißt der Frequenzgang des Real- und des Imaginäranteils, beziehungsweise von Betrag und Phase, auf Abweichungen (Anomalien) gegenüber dem Verlauf der Impedanz bei einem idealen Prüfobjekt hin untersucht wird.
In einem weiteren Prüfschritt e) der Erfindung wird dazu der Impedanzverlauf $Z(\omega)$ mit einem bevorzugt zuvor bestimmten Normimpedanzverlauf eines idealen Prüfobjekts, das eine intakte Korrosionsschutzumhüllung aufweist, verglichen, um graphische Abweichungen (Anomalien) im Kurvenverlauf als, bevorzugt zweites, Prüfkriterium zu erkennen. In einer bevorzugten Ausführung werden dazu:

e1) die Realanteile (Re(Z)) und Imaginäranteile (Im(Z)) der registrierten Impedanz $Z(\omega)$ in Form einer oder mehrerer Ortskurven auftragen, und

e2) der Verlauf der Ortskurve der registrierten Impedanz $Z(\omega)$ mit einer Normortskurve verglichen, wobei, als zumindest zweites Prüfkriterium, eine graphische Abweichung (Anomalie) der Ortskurve der registrierten Impedanz Z(w) von der Normortskurve eine fehlerhafte Korrosionsschutzumhüllung und eine Korrosionsgefährdung des Prüfobjekts anzeigt.

Unter einem "Normimpedanzverlauf" oder einer "Normortskurve" wird vorliegend ein Impedanzverlauf (Ortskurve) verstanden, der von einem vergleichbaren idealen Prüfobjekt mit intakter Korrosionsschutzumhüllung bei denselben Messparametern und Messbedingungen registrierbar wäre. Die Erfindung sieht zur Erstellung des Normimpedanzverlaufs der "Normortskurve" vor, diesen anhand des in Figur 2 dargestellten Ersatzschaltbilds bevorzugt vorab zu berechnen und zwar bevorzugt unter Berücksichtigung des zuvor ermittelten $R_U$; die Berechnungsgrundlage ist in Formel (2) und (2a) dargestellt.

In einer alternativen und bevorzugten Ausführung der Erfindung wird der zum Vergleich herangezogene Normimpedanzverlauf der Normortskurve nicht berechnet sondern ist als idealisiertes "graphisches Modell" hinterlegt und kann zum Vergleich abgerufen werden. In einer weiter bevorzugten Variante davon wird für den Normimpedanzverlauf generell von einem einfachen geometrischen Verlauf in den Bode- oder Nyquist-Darstellungen, ohne zusätzliche Wendepunkte, lokale Maxima oder Minima, ausgegangen. Auf einen konkreten Vergleich mit einem konkreten, hinterlegten oder berechneten Normimpedanzverlauf kann dabei verzichtet werden. Ein bevorzugt gewählter idealistischer Normimpedanzverlauf stellt sich in der Nyquist-Darstellung als Halbkreis oder Halbkreissegment dar, das die Re(Z)-Achse in zwei Fußpunkten (Im(Z) = 0) schneidet (Figur 4A); in der Bode-Darstellung ergeben sich entsprechend einfache Phasen- und Amplitudendiagramme. Der im Wesentlichen halbkreisförmige Verlauf der dem Ersatzschaltbild nach Figur 2 und der Formel (2) und (2a) entsprechenden idealistischen Kurve ist demgemäß durch eine im Wesentlichen konstante Krümmung, ohne weitere lokale Maxima, Minima oder Wendepunkte, charakterisiert. Bevorzugt werden demgemäß alle Abweichungen im Kurvenverlauf der realen Ortskurve der gemessenen Impedanz $Z(\omega)$ von diesem idealistischen halbkreisförmigen Verlauf als "Anomalie" der Ortskurve gewertet. Solche Anomalien sind in Figur 4B und Figur 4C beispielhaft dargestellt. Besonders bevorzugt sind Anomalien der Ortskurve erfindungsgemäß charakterisiert durch das Auftreten mindestens eines Wendepunktes und/oder mindestens eines zusätzlichen oder lokalen Maximums oder Minimums. Die Anomalie kann durch rein graphische Mittel automatisch detektiert werden. Alternativ werden an sich bekannte statistische Verfahren zur Analyse der Abweichung der realen Messwerte von dem Normimpedanzverlauf und zur Bestimmung des Abweichungsmaßes herangezogen.

Die Erfinder fanden überraschend, dass eine solche Anomalie der Ortskurve als Prüfkriterium zuverlässige Aussagen über die Integrität der Korrosionsschutzumhüllung des Prüfobjekts und über das Vorhandensein aktiver Korrosion ermöglicht. Eine Anomalie der Ortskurve weist erfindungsgemäß sicher auf eine Abweichung der Korrosionsschutzumhüllung von den Parametern einer intakten Korrosionsschutzumhüllung hin. Diese Abweichung wird gemäß der Erfindung unmittelbar als Fehler in der Integrität der Korrosionsschutzumhüllung bewertet. Ein Prüfobjekt mit fehlerhafter Korrosionsschutzumhüllung kann gemäß diesem Prüfkriterium als potentiell korrosionsgefährdet eingestuft werden.

Die Erfindung sieht zur aussagekräftigen sicheren Prüfung oder Vorprüfung bevorzugt die Erfassung zumindest der beiden vorgenannten Prüfungskriterien vor:

Kriterium I: $R_U$ kleiner oder gleich $R_U$min ?

Kriterium II: Anomalie der Ortskurve $Z(\omega)$ ?

Beide Kriterien können unmittelbar aus den Ergebnissen/Daten der erfindungsgemäßen Impedanzmessung (Impedanzspektroskopie) ermittelt werden. Dies erlaubt vorteilhafterweise einen automatisierten und im Wesentlichen einschrittigen Prüfungsablauf. Die Erfindung sieht zur Durchführung des Verfahrens eine neuartige und einfache Messanordnung vor, die in Figur 1 skizziert und nachstehend näher erläutert ist. Diese kann von der Prüfperson einfach am Prüfobjekt und in dem das Prüfobjekt umgebenden Erdreich angelegt werden, und die automatisiert ablaufende Messung und Prüfung kann gestartet werden. Als Ergebnis oder Zwischenergebnis der Prüfung dieser beiden erfindungsgemäßen Prüfkriterien I und II sieht die Erfindung bevorzugt folgende drei Alternativen vor:

A: Korrosionsschutzumhüllung ist intakt, Prüfobjekt ist nicht korrosionsgefährdet;

B: Korrosionsschutzumhüllung weist potentiell Fehlstellen auf, Prüfobjekt ist potentiell korrosionsgefährdet;

C: Korrosionsschutzumhüllung weist Fehlstellen auf, Prüfobjekt ist sicher korrosionsgefährdet.

Erfindungsgemäß wird die Integrität der Korrosionsschutzumhüllung des metallischen Prüfobjekts und damit die Korrosionsgefährdung des Prüfobjekts anhand folgender Entscheidungsmatrix beurteilt:

f1) bei Erfüllen sowohl des ersten Prüfkriteriums ($R_U > R_U$min) als auch des zweiten Prüfkriteriums (keine Anomalie der Ortskurve) wird die Korrosionsschutzumhüllung des Prüfobjekts als intakt und das Prüfobjekt als nicht korrosionsgefährdet eingestuft (Ergebnis A);

f2) bei Erfüllen des ersten Prüfkriteriums ($R_U > R_U$min) aber Nichterfüllen des zweiten Prüfkriteriums (vorhandene Anomalie der Ortskurve) wird die Korrosionsschutzumhüllung als bedingt intakt und das Prüfobjekt als bedingt korrosionsgefährdet eingestuft (Ergebnis B);

f3) bei Nichterfüllen des ersten Prüfkriteriums ($R_U \leq R_U$min) aber Erfüllen des zweiten Prüfkriteriums (keine Anomalie der Ortskurve) wird die Korrosionsschutzumhüllung als bedingt intakt und das Prüfobjekt als bedingt korrosionsgefährdet eingestuft (Ergebnis B); und

f4) bei Nichterfüllen sowohl des ersten Prüfkriteriums ($R_U \leq R_U$_ min) als auch des zweiten Prüfkriteriums (vorhandene Anomalie der Ortkurve Z(w)) wird die Korrosionsschutzumhüllung als fehlerhaft und das Prüfobjekt als korrosionsgefährdet eingestuft (Ergebnis C).

Im Falle von Ergebnis B (f2) oder f3), und nur dann, kann bevorzugt oder muss eine weitere detaillierte Korrosionsschutzprüfung, die die Prüfung anhand weiterer elektrischer Parameter der Messstrecke zum Gegenstand hat, in an sich bekannter Weise oder bevorzugt wie nachstehend näher beschrieben durchgeführt werden. In den Fällen A(f1) und C(f4) braucht keine weitere aufwändige Prüfung mehr angestrengt zu werden, da das Prüfergebnis sicher ist.

Die Erfindung sieht vor, dass zur bevorzugt weiteren Beurteilung der Korrosionsgefährdung des Prüfobjekts, insbesondere eines erdgedeckten Druckbehälters, eine Prüfung mit Hilfe einer Kennzahlermittlung in Anlehnung an TRB 601 durchgeführt wird. Diese weitere Prüfung sieht die Berücksichtigung der an sich bekannten und in an sich bekannter Weise ermittelbaren Einflussgrößen spezifischer Bodenwiderstand und Homogenität des Erdbodens sowie zusätzlich der weiteren Einflussgrößen Ausschaltpotential und Einspeisestrom bei einer Einspeisemessung vor. Dabei werden den Einflussgrößen in Anlehnung an TRB 601 Kennzahlen als bevorzugt drittes Prüfkriterium III zugeordnet.

Im Falle des Ergebnis B nach Berücksichtigung der Prüfkriterien I und II wird im Falle, dass die Summe der Kennzahlen kleiner als 18 sind (Prüfkriterium III) das Prüfobjekt, vorzugsweise für die gesamte Prüfung endgültig, als nicht korrosionsgefährdet und im Falle der Summe der Kennzahlen von 18 oder mehr als korrosionsgefährdet eingestuft. Beträgt die Summe der Kennzahlen der Einflussgrößen 18 oder mehr, wird im Falle von Druckbehältern ein kathodischer Korrosionsschutz verlangt.

Zur Bestimmung der Korrosionsgefährdung in Anlehnung an die TRB 601 wird der spezifische Bodenwiderstand in an sich bekannter Weise, insbesondere nach dem Wenner-Verfahren, ermittelt. In einer bevorzugten Variante der Erfindung wird der spezifische Bodenwiderstand an bis zu fünf oder mehr unterschiedlichen Messpositionen, und zwar bevorzugt in einer Tiefe von 0,8 m, einer Tiefe von 1,6 m, einer Tiefe von 2,4 m, einer Tiefe von 3,2 m und in 4 m Tiefe, bestimmt. Ist eine Messung nach dem Wenner-Verfahren nicht durchführbar, kann der spezifische Bodenwiderstand in einer sogenannten "Soil-Box" mit den Böden aus den entsprechenden Tiefen stellvertretend gemessen werden. Die Kennzahl für den spezifischen Bodenwiderstand wird in Abhängigkeit vom niedrigsten Wert des spezifischen Bodenwiderstandes bestimmt. Bei einem spezifischen Bodenwiderstand von 10 kOhm·cm wird eine Kennzahl von 18, für einen Widerstand von mehr als 10 bis 13 kOhm·cm eine Kennzahl von 12, für einen Widerstand von mehr als 13 bis 20 kOhm·cm eine Kennzahl von 6 und für einen Widerstand größer 20 kOhm·cm eine Kennzahl von 2 bestimmt.

Ebenso wird die Homogenität als weitere Einflussgröße bestimmt. Dies geschieht durch Analyse/Vergleich der aus der Ermittlung des spezifischen Bodenwiderstands für verschiedene Tiefen ermittelten spezifischen Bodenwiderstandswerte. Dies dient im Wesentlichen der Abschätzung der Neigung von Korrosion and Konzentrationselementen. Unterscheiden sich die Bodenwiderstandswerte einer Messereihe bei den verschiedenen Abständen, so ist zur Bestimmung der Homogenität des Erdbodens vorzugsweise das Verhältnis des größten gemessenen Bodenwiderstandswerts zum kleinsten gemessenen Wert zu bilden. Für ein Bodenwiderstandsverhältnis bis 1,5 wird eine Kennzahl von 0, für ein Bodenwiderstandsverhältnis größer 1,5 bis 2 eine Kennzahl von 3, für ein Bodenwiderstandsverhältnis größer 2 bis 3 eine Kennzahl von 6, für ein Bodenwiderstandsverhältnis größer 3 bis 4 eine Kennzahl von 9 und für ein Bodenwiderstandsverhältnis größer 4 eine Kennzahl von 12 bestimmt. Beträgt der gemessene niedrigste Wert des gemessenen spezifischen Bodenwiderstands mehr als 50 kOhm·cm, braucht vorzugsweise die Homogenität des Erdbodens nicht bestimmt werden; es wird dann eine Kennzahl 0 angesetzt.

Anstelle der in der TRB 601 vorgesehenen Ermittlung der Einflussgrößen Prüfobjekt/Boden-Potential und Ausbreitungswiderstand werden das Ausschaltpotential und der Einspeisestrom $I_E$ in das Prüfobjekt nach bevorzugt 60 Sekunden Einspeisedauer bei einem Einschaltpotential von bevorzugt -2,0 V oder alternativ -1.7 V bestimmt. Die Potentiale werden vorzugsweise jeweils gegenüber einer $CuSO_4$-Vergleichselektrode in an sich bekannter Weise gemessen. Stellt sich dabei ein Ausschaltpotential von mehr als -850 mV ein, wird bestimmt, dass das Korrosionsschutzpotential zur Veränderung der Korrosion des Prüfobjekts nicht erreicht wird. Demgemäß wird diesem Prüfkriterium die Kennzahl 18 zugeordnet. Wird hingegen ein Ausschaltpotential erreicht, das kleiner ist als -850 mV, wird davon ausgegangen, dass das Korrosionsschutzpotential des Prüfobjekts erreicht werden kann. Die Kennzahl wird dann erfindungsgemäß bevorzugt anhand der Höhe des gemessenen Einspeisestroms $I_E$ für die Polarisierung auf Schutzpotential ermittelt. Das Schutzpotential wird in Abhängigkeit des Materials des Prüfobjekts gewählt. Für die Kennzahl K ergibt sich gemäß

EP 2 333 518 B1

der Erfindung folgende Berechnungsgrundlage; die dabei berechnete Kennzahl wird auf die ganze Zahl aufgerundet:

$$K = \frac{6}{5} I_E \ [\mu A] \hspace{3cm} (9)$$

Optional zusätzlich kann als weiteres Prüfkriterium die Behälterkapazität $C_U$ bestimmt werden. Diese wird mit einer theoretischen oder typischen Kapazität von Prüfkörpern mit intakter Korrosionsschutzumhüllung verglichen. Die Behälterkapazität wird bei intakter Umhüllung von der Schichtstärke und der Prüfkörperoberfläche bestimmt. Daraus ergeben sich für Prüfkörper typische Kapazitätswerte. Überschreiten die bei der erfindungsgemäßen Impedanzmessung ermittelten Werte diese typischen vorausbestimmten Werte, weist dies zusätzlich auf eine fehlerhafte Korrosionsschutzumhüllung und gegebenenfalls aktive Korrosionsstellen hin.

Die vorgenannten Parameter, Grenzwerte und Berechungsformeln gelten beispielhaft für Flüssiggasbehälter mit Epoxidbeschichtung und einem Fassungsvermögen von weniger als 3 t. Es versteht sich, dass für andere Prüfobjekte gegebenenfalls andere Werte gültig sein können, ohne dass dadurch die erfindungsgemäße Lehre verlassen werden würde.

Wird eine fehlerhafte Korrosionsschutzumhüllung gefunden, können Reparaturmaßnahmen, beispielsweise ein Nachisolieren des Prüfkörpers im Bereich an sich bekannter Stellen des Prüfkörpers, an denen bekanntermaßen üblicherweise am ehesten Korrosion oder Fehlstellen auftreten, durchgeführt werden. Eine andere übliche "Reparaturmaßnahme" ist das Abtrennen des Prüfkörpers von Rohrleitungen, die fehlerhafterweise einen Erdschluss erzeugen. Anschließend kann das erfindungsgemäße Prüfverfahren wiederholt werden. Wird nach diesen Maßnahmen erneut eine fehlerhafte Korrosionsschutzumhüllung gefunden, so ist vorzugsweise davon auszugehen, dass der Prüfkörper korrosionsgefährdet ist.

In einer besonderen Ausgestaltung des erfindungsgemäßen Verfahrens wird zusätzlich unmittelbar der Ausgleichsstrom bestimmt, der gegebenenfalls über mit dem Prüfobjekt elektrisch verbundene Rohrleitungen abfließt, bestimmt. Beispielsweise kann durch Anlegen einer Stromzange um die Rohrleitung der Ableitstrom bestimmt werden. Zweckmäßige Spannungen zur Bestimmung des Ausgleichsstroms sind 5,5 $V_{eff}$ bei etwa 10 Hertz. Ausgleichsströme, die über mangelhaft gegenüber dem Prüfobjekt isolierte Rohrleitungen mit Erdschluss fließen, müssen zur Vermeidung von Korrosion unbedingt vermieden werden. Es hat sich gezeigt, dass Fehlstellen an der Korrosionsschutzumhüllung des Prüfobjekts selbst sowohl anodische als auch kathodische Reaktionen bedingen. Aufgrund der elektrischen Neutralität eines isolierten Prüfkörpers stellt sich eine statische Ladungsverschiebung ein, wodurch die anodische und die kathodischen Reaktionen an den Fehlstellen der Korrosionsschutzumhüllung selbst zum Erliegen kommen oder nur stark verlangsamt ablaufen. Tritt jedoch aufgrund einer mit dem Prüfobjekt elektrisch verbundenen Rohrleitung mit Erdschluss ein konstanter Ableitstrom auf, führt dies zu einer dauerhaften Nettoladungsverschiebung am gesamten Prüfobjekt. Dadurch wird die kathodische Reaktion in ihrem Ablauf begünstigt, was wiederum zum verstärkten Ablauf der entsprechenden anodischen Reaktion führt. Es zeigt sich, dass von einem durch einen Erdschluss entstandenen Ableitstrom mitunter die größte Korrosionsgefahr für das Prüfobjekt ausgeht. In bevorzugter Ausgestaltung sieht die Erfindung daher vor, den Ableitstrom, der über an das Prüfobjekt elektrisch angeschlossene Rohrleitungen abfließt, zu bestimmen.

In diesem Zusammenhang kann die elektrische Verbindung der an das Prüfobjekt angeschlossenen Rohrleitung mit dem Erdanschluss an einem Gebäude (Hausnetz) zu einer auf Prägung eines Wechselstroms führen. Der in Gebäuden vorgesehene Erdanschluss zum Potenzialausgleich ist häufig aufgrund der Installation im Hausnetz und dessen Betriebsbelastung nicht symmetrisch, das heißt nicht potenzialneutral zum umgebenden Erdreich. Dadurch treten zwischen dem Erdanschluss des Hausnetzes und dem erdgedeckten Prüfkörper Potenzialunterschiede auf. Sind Prüfobjekt und Hausnetz über eine Rohrleitung elektrisch miteinander verbunden, wird Wechselstromkorrosion beobachtet. Die Erfindung sieht zur Überprüfung einer Wechselstromkorrosion deshalb in bevorzugter Ausgestaltung zusätzlich vor, bei der Bestimmung von I($\omega$) (Strommessung) wechselstromförmige Überlagerungen, die auf ein Hausnetz zurückgehen, das heißt insbesondere Frequenzanteile im Bereich von 50 Hertz und deren Oberwellen, gesondert zu analysieren, um so auf Fehler in der Isolation vom Prüfobjekt gegenüber einer Rohrleitung mit Erdschluss schließen zu können.

Gegenstand der Erfindung sind auch Mittel und Anordnungen von Mitteln, die zur Durchführung des erfindungsgemäßen Verfahrens geeignet und bevorzugt speziell dazu ausgebildet sind. Eine erfindungsgemäße Vorrichtung (100) mit den Merkmalen des Anspruchs 10 zur Bestimmung der Korrosionsgefährdung eines in Erdreich (220) gebetteten metallischen Prüfobjekts (200) mit Korrosionsschutzumhüllung (210) weist zumindest auf:

Mittel A (110) zum Anlegen einer frequenzveränderlichen Wechselspannung U(w) über eine Messtrecke zwischen Prüfobjekt (200) und dem das Prüfobjekt umgebendem Erdreich (220),

Mittel B (120) zum Ermitteln des der Messstrecke eingeprägten Stroms I($\omega$),

Mittel C (130) zum Ermitteln und Registrieren der Impedanz Z($\omega$) der Messstrecke in Abhängigkeit von der Frequenz einer angelegten Wechselspannung U($\omega$),

Mittel D (140) zum Ermitteln des ohmschen Serienwiderstands $R_U$ der Korrosionsschutzumhüllung aus der registrierten Impedanz Z($\omega$),

Mittel E (150) zur bevorzugt graphischen Analyse der Ortskurvenfunktion der registrierten Impedanz Z(w).

Die nachfolgenden Figuren und Beispiele dienen dazu, die Erfindung näher zu charakterisieren, ohne dass diese beschränkend zu verstehen wären.

Figur 1 zeigt eine schematische Darstellung des Messverfahrens zur Prüfung eines erdgedeckten Prüfobjekts (200) (hier: Flüssiggasdruckbehälter), das in das Erdreich (220) eingegraben ist und über den Domschacht (201) mit Abdeckung von außen zugänglich ist. Das Prüfobjekt weist einen Metallmantel (210) auf, der von einer Korrosionsschutzumhüllung (211) umgeben ist, um den Metallmantel (210) elektrisch und chemisch weitestgehend vom Erdreich (220) abzutrennen. Zur erfindungsgemäßen elektrischen Impedanzmessung ist eine Wechselspannungsquelle (110) über mindestens eine Kontaktstelle (121) mit dem Prüfobjekt (200) metallenleitend verbunden. Der andere Pol der Wechselspannungsquelle (110) ist leitend mit dem Erdreich (220) über mindestens eine Erdelektrode (122) verbunden. Das Prüfobjekt (200), der mindestens eine Kontakt (121) am Prüfobjekt (200), das Erdreich (220) und die Erdelektrode (122) bilden die Messstrecke. Der beim Anlegen der Wechselspannung in der Messstrecke fließende Strom ist mit der Strommesseinrichtung (120) erfassbar. Bevorzugt weist die Wechselspannungsquelle (110) einen Frequenzgenerator zum Erzeugen einer frequenzveränderlichen Wechselspannung auf. Wechselspannungsquelle (110) und Strommesseinrichtung (120) sind über Daten- oder Messleitungen mit einer Rechen- und Anzeigeeinheit (130) verbunden. In der Rechen- und Anzeigeeinheit (130) ist der komplexe Widerstand (Impedanz) berechenbar und graphisch analysierbar. Bevorzugt ist in der Rechen- und Anzeigeeinheit das Ergebnis der Impedanzmessung und bevorzugt das Ergebnis der Prüfung anzeigbar oder signalisierbar.

Figur 2 zeigt das erfindungsgemäß gewählte Ersatzschaltbild der Messstrecke. In diesem Ersatzschaltbild entspricht $R_U$ im Wesentlichen dem elektrischen ohmschen Serienwiderstand der Korrosionsschutzumhüllung (211) des Prüfobjekts (200); die Parallelkapazität $C_U$ entspricht im Wesentlichen der elektrischen Kapazität der Korrosionsschutzumhüllung (211), das heißt besonders der Kapazität des durch die Korrosionsschutzumhüllungsschicht gebildeten Dielektrikums; der ohmsche Serienwiderstand $R_E$ entspricht im Wesentlichen dem Ausbreitungswiderstand des Erdreichs (220). Gemäß der Erfindung gilt dieses Ersatzschaltbild für ein Prüfobjekt mit intakter Korrosionsschutzumhüllung, das dem Prüfobjekt ausreichenden Korrosionsschutz bietet. Weist die Korrosionsschutzumhüllung hingegen Fehlstellen auf, so treten in einer dem Ersatzschaltbild von Figur 2 entsprechenden Messstrecke zusätzliche komplexe Impedanzen, beispielsweise eine durch Diffusionsprozesse an den Grenzschichten eines Korrosionselement gebildete Impedanz, auf, die das Frequenzverhalten der Messstrecke erkennbar beeinflussen.

Figur 3 zeigt den prinzipiellen erfindungsgemäßen Prüfablauf. Der durch Anlegen der frequenzvariablen Wechselspannung mittels Wechselspannungsquelle (110) in die Messstrecke eingeprägte Strom wird mit der Strommesseinrichtung (120) erfasst. Der daraus ermittelte Wechselstromwiderstand (Impedanz) (130) wird bevorzugt graphisch analysiert (141, 151). Zumindest wird daraus der ohmsche Serienwiderstand der Korrosionsschutzumhüllung $R_U$ bevorzugt graphisch aus dem Impedanzverlauf ermittelt (141); $R_U$ wird bevorzugt aus den extrapolierten Achsenschnittpunkten der Ortskurve von Z($\omega$) mit der Realachse ermittelt. Bevorzugt zusätzlich wird der Impedanzverlauf auf Abweichungen von einem Normimpedanzverlauf geprüft (151); die hier beispielhaft dargestellte detektierte Abweichung ist in (151) im strichlierten Rechteck hervorgehoben.

In Figur 4 sind beispielhaft typische Kurvenverläufe der Ortskurve von Z(w) dargestellt. Figur 4A zeigt den zu erwartenden Kurvenverlauf gemäß Ersatzschaltbild nach Figur 2. Diese entspricht einem idealen Prüfobjekt mit intaktem Korrosionsschutz. In den Figuren 4B und 4C sind typische Abweichungen vom Normimpedanzverlauf nach Figur 4A illustriert. Diese ergeben sich, wenn die Korrosionsschutzumhüllung Fehlstellen mit aktiver Korrosion aufweist. Typische graphische Abweichungen sind das Auftreten mindestens eines Wendepunkts (Pfeil in Figur 4B) und/oder das Auftreten mindestens eines lokalen Minimums oder Maximums (Pfeil in Figur 4C).

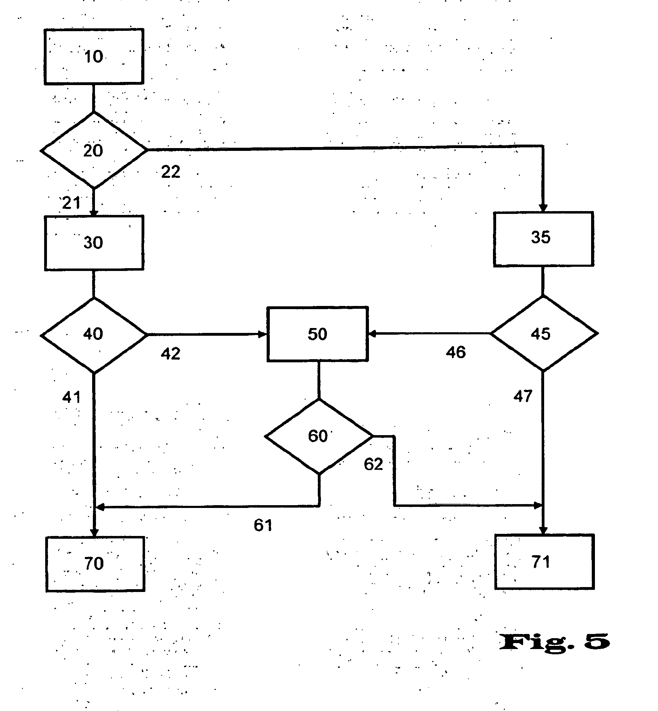

Figur 5 zeigt eine bevorzugte Ausführung des erfindungsgemäßen Prüfablaufs:

In Schritt (10) wird die frequenzveränderliche Wechselspannung U($\omega$) am Prüfobjekt angelegt (siehe Figur 1) und der in der Messstrecke fließende Wechselstrom I($\omega$) und die Impedanz Z(w) werden erfasst. Aus dem Impedanzverlauf Z(w) wird der ohmsche Serienwiderstand der Korrosionsschutzumhüllung $R_U$ bevorzugt graphisch ermittelt (siehe Figur 3).

In Schritt (20) wird nun geprüft, ob der bestimmte Widerstand $R_U$ einen vorbestimmten Mindestwert $R_U$ min unterschreitet (Prüfkriterium I). Ist $R_U \leq R_U$min, wird weiter über Zweig (22) vorgegangen. Ist $R_U > R_U$min, wird weiter über Zweig (21) vorgegangen.

In Schritt (30), und alternativ in Schritt (35), wird die Ortskurve des gemessenen Impedanzverlaufs Z(w) auf graphische Abweichungen hin geprüft. In Schritt (40) wird nach Schritt (30) geprüft, ob eine Abweichung der Ortskurve (Anomalie) vorliegt. Liegt eine Anomalie vor, wird weiter über Zweig (42) vorgegangen. Liegt keine Anomalie vor, wird über Zweig (41) vorgegangen.

Alternativ wird in Schritt (45) nach Schritt (35) geprüft, ob eine Abweichung der Ortskurve (Anomalie) vorliegt. Liegt eine Anomalie vor, wird über Zweig (47) vorgegangen. Liegt keine Anomalie vor, wird über Zweig (46) vorgegangen.

In Schritt (50) wird dann optional bevorzugt eine Bewertung der Korrosionsgefährdung mit Hilfe einer Kennzahlermittlung in Anlehnung an TRB 601 durchgeführt. Diese Bewertung beinhaltet die Ermittlung des spezifischen Bodenwiderstands, der Homogenität des Erdbodens und des Ausschaltpotentials und Einspeisestroms des Prüfobjekts. In Schritt (60) wird dann geprüft, ob die Summe der Kennzahlen der Bewertung die Summe 18 erreicht oder überschreitet. Wird die Summe 18 nicht erreicht, wird über Zweig (61) vorgegangen. Wird die Summe 18 erreicht oder überschritten, wird über Zweig (62) vorgegangen.

In Schritt 70 wird dann die Korrosionsschutzumhüllung als ausreichend intakt und das Prüfobjekt als ausreichend korrosionsgeschützt bewertet. Alternativ wird dann in Schritt (71) die Korrosionsschutzumhüllung als fehlerhaft und das Prüfobjekt als korrosionsgefährdet bewertet.

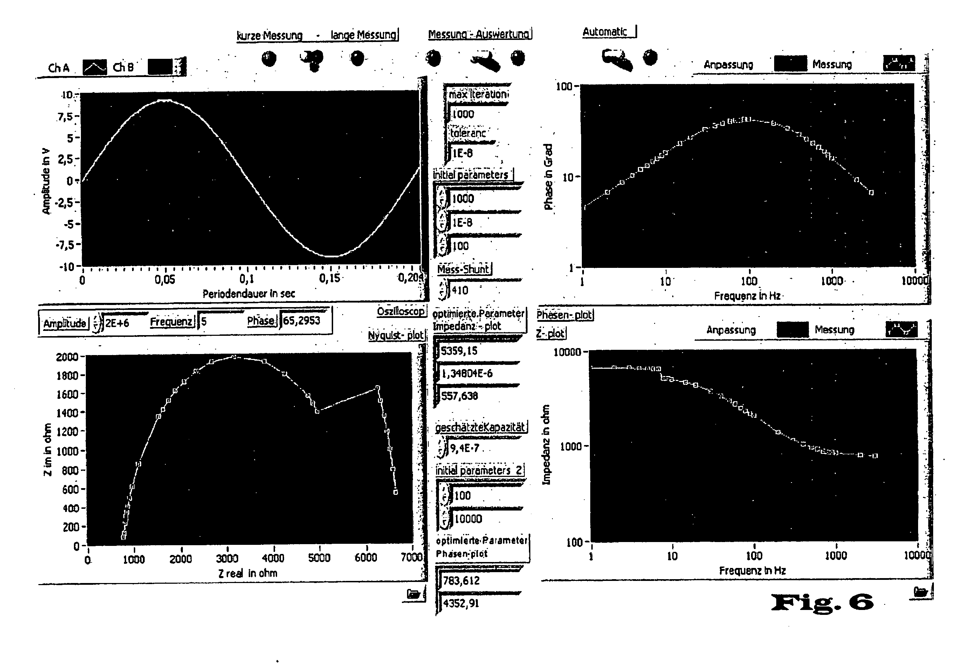

Figur 6 zeigt beispielhaft eine Bildschirmausgabe der erfindungsgemäß automatisch durchgeführten graphischen Auswertung der gemessenen Impedanzwerte zur Ermittlung des ohmschen Serienwiderstands der Korrosionsschutzumhüllung ($R_U$) und zur Ermittlung von Anomalien in der Ortskurve von Z(w). Die Überprüfung der Integrität der Korrosionsschutzumhüllung und der Korrosionsgefährdung des Prüfobjekts erfolgt automatisch.

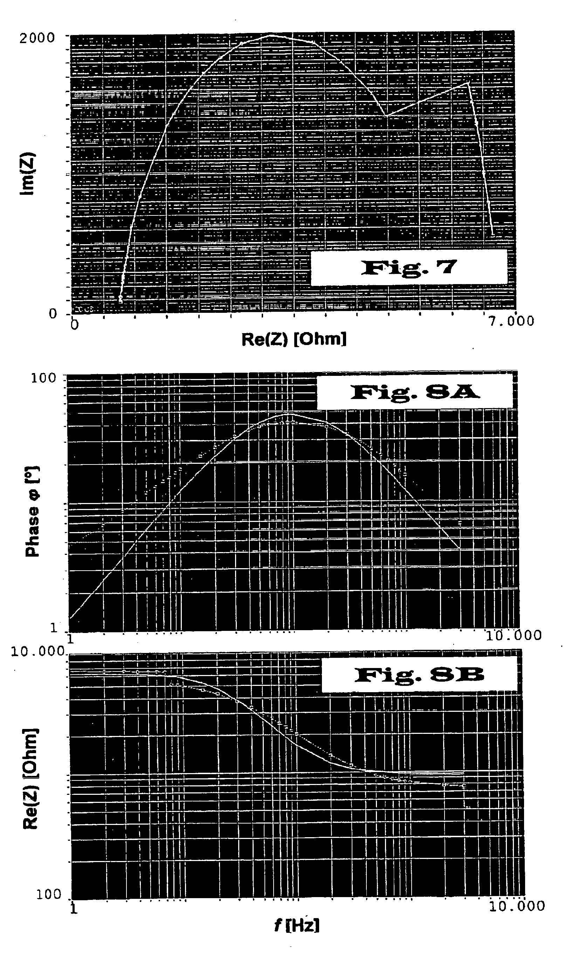

Figur 7 zeigt beispielhaft eine Ortskurve der bei der erfindungsgemäßen elektrischen Messung des Prüfobjekts gefundenen Impedanzwerte Z($\omega$). In dem sogenannten Nyquist-Diagramm wird der imaginäre Anteil der Impedanz gegen den realen Anteil der Impedanz aufgetragen. Figur 7 zeigt die Messwerte eines Prüfobjekts mit fehlerhafter Korrosionsschutzumhüllung. Im rechten Teil des Bildes ist deutlich eine Anomalie im Impedanzverlauf (lokales Minimum) zu erkennen.

Figur 8 zeigt eine alternative graphische Darstellung der registrierten Impedanzwerte Z($\omega$). In Figur 8A wird die Phase des gemessenen Stromsignals (I($\omega$)) gegen die Frequenz aufgetragen. In Figur 8B wird der Betrag der Impedanz Re(Z) gegen die Frequenz aufgetragen. Neben den konkreten Messwerten (diskrete Messpunkte mit Linien verbunden) sind als jeweils durchgehende Linien die Normkurvenverläufe des Ersatzschaltbilds nach Figur 2 eingetragen, die sich durch Kurvenanpassung ergeben, wobei für $R_E$, $R_U$ und $C_U$ diejenigen Parameter gewählt wurden, welche die beste Annäherung an die tatsächlich gemessenen Impedanzwerte ergeben. Im Impedanzverlauf (Figur 8B) tritt im Bereich von 6 bis 7 Hz ein Impedanzsprung auf, der erfindungsgemäß als Anomalie gewertet wird. Im vorliegenden Beispiel entsprechen die in Figur 8 dargestellten Werte den in Figur 7 dargestellten. Zur Ermittlung von $R_U$ kann dieser durch Extrapolation des Impedanzverlaufs in Figur 7 mit der entsprechenden Normortskurve unmittelbar an den Achsenschnittpunkten abgelesen werden. In den Graphen gemäß Figur 8 ergibt sich $R_U$ erfindungsgemäß bevorzugt durch Parameterfitting der gemessenen Impedanzwerte mit den Normkurvenverläufen, die dem Ersatzschaltbild nach Figur 2 entsprechen.

**Patentansprüche**

1. Verfahren zur Bestimmung der Korrosionsgefährdung eines in Erdreich gebetteten metallischen Prüfobjekts mit Korrosionsschutzumhüllung, enthaltend die Schritte:

a) Anlegen einer frequenzveränderlichen Wechselspannung U(w) über eine von dem Prüfobjekt und dem das Prüfobjekt umgebenden Erdreich gebildete Messstrecke;
b) Ermitteln des dadurch der Messstrecke eingeprägten Stroms I($\omega$);
c) Ermitteln und Registrieren der Impedanz der Messstrecke in Abhängigkeit von der Frequenz der angelegten Wechselspannung U($\omega$);
d) Ermitteln des ohmschen Serienwiderstands $R_U$ der Korrosionsschutzumhüllung des Prüfobjekts aus dem Impedanzverlauf Z(w) als erstes Prüfkriterium, wobei die Unterschreitung eines vorbestimmten Grenzwerts $R_U$min eine potentiell fehlerhafte Korrosionsschutzumhüllung und eine potentielle Korrosionsgefährdung des Prüfobjekts anzeigt und
e) Vergleichen des Impedanzverlaufs Z($\omega$) mit einem vorbestimmten Impedanzverlauf eines idealen Prüfobjekts mit intakter Korrosionsschutzumhüllung, wobei mindestens eine grafische Abweichung (Anomalie) des Impedanzverlaufs Z($\omega$) von dem Normimpedanzverlauf als zweites Prüfkriterium eine potentiell fehlerhafte Korrosionsschutzumhüllung und eine potentielle Korrosionsgefährdung des Prüfobjekts anzeigt und

f) Beurteilen der Korrosionsschutzumhüllung und der Korrosionsgefährdung des Prüfobjekts nach folgender Maßgabe:

f1) bei Erfüllung sowohl des ersten Prüfkriteriums ($R_U > R_U$min) als auch des zweiten Prüfkriteriums (keine Anomalie der Ortskurve) wird die Korrosionsschutzumhüllung des Prüfobjekts als intakt und das Prüfobjekt als nicht korrosionsgefährdet eingestuft;

f2) bei Erfüllung des ersten Prüfkriteriums ($R_U > R_{U\_}$ min) aber Nichterfüllung des zweiten Prüfkriteriums (vorhandene Anomalie der Ortskurve) wird die Korrosionsschutzumhüllung als potentiell fehlerhaft und das Prüfobjekt als bedingt korrosionsgefährdet eingestuft;

f3) bei Nichterfüllung des ersten Prüfkriteriums ($R_U \leq R_U$min) aber Erfüllung des zweiten Prüfkriteriums (keine Anomalie der Ortskurve) wird die Korrosionsschutzumhüllung als bedingt intakt und das Prüfobjekt als bedingt korrosionsgefährdet eingestuft; und

f4) bei Nichterfüllung sowohl des ersten Prüfkriteriums ($R_U \leq R_U$min) als auch des zweiten Prüfkriteriums (vorhandene Anomalie der Ortkurve $Z(\omega)$) wird die Korrosionsschutzumhüllung als fehlerhaft und das Prüfobjekt als korrosionsgefährdet eingestuft.

2.  Verfahren nach Anspruch 1, wobei die grafische Abweichung ausgewählt ist aus zusätzlichem Wendepunkt und lokalen Minimum oder Maximum des Impedanzverlaufs.

3.  Verfahren nach Anspruch 1 oder 2, wobei der Impedanzverlauf $Z(w)$ durch Auftragen der Realanteile $Re(Z)$ und Imaginäranteile $F(Z)$ der Impedanz in Form einer Ortskurve dargestellt wird.

4.  Verfahren nach einem der vorstehenden Ansprüche , wobei im Falle von f2) oder f3) im Anschluss eine Bewertung der Korrosionsgefährdung in Anlehnung die Prüfungsrichtlinien TRB 601 unter Berücksichtigung der Einflussgrößen, ausgewählt aus: spezifischer Bodenwiderstand, Homogenität des Erdbodens sowie Ausschaltpotential und Einspeisestrom bei einer Einspeisemessung, durchführt wird, wobei den Einflussgrößen jeweils Kennzahlen zugeordnet werden, wobei im Falle der Summe der Kennzahlen kleiner als 18 das Prüfobjekt als nicht korrosionsgefährdet und im Falle der Summe der Kennzahlen von 18 oder mehr das Prüfobjekt als korrosionsgefährdet eingestuft wird.

5.  Verfahren nach einem der vorstehenden Ansprüche, wobei die Wechselspannung $U(w)$ zwischen mindestens einem metallen leitenden Kontakt am Prüfobjekt und mindestens einer in der Umgebung des Prüfobjekts im Erdreich platzierten Erdelektrode (Erdspieß) angelegt wird.

6.  Verfahren nach einem der vorstehenden Ansprüche, wobei der Serienwiderstand der Korrosionsschutzumhüllung $R_U$ über das Ersatzschaltbild eines idealen Prüfobjekts mit intakter Korrosionsschutzumhüllung aus den Impedanzwerten $Z(w)$ ermittelt wird nach:

$$Z(\omega) = R_E + (R_U \| C_U),$$

wobei $Z(\omega)$ = ermittelter Impedanzwert der realen Messstrecke, $R_E$ = ohmscher Serienwiderstand im Erdreich bis zur Korrosionsschutzumhüllung des Prüfobjekts, $R_U$ = ohmscher Isolationswiderstand der Korrosionsschutzumhüllung und $C_U$ = die zu $R_U$ parallele Kapazität der idealen Korrosionsschutzumhüllung des Prüfobjekts.

7.  Verfahren nach einem der vorstehenden Ansprüche, wobei $R_U$ grafisch aus der Ortskurve der Impedanz $Z(w)$ ermittelt wird, wobei $R_U$ dem Betrag der Differenz der Impedanzwerte $Z(\omega1)$ und $Z(\omega2)$ entspricht, wobei bei $Z(\omega1)$ die Impedanz ist, bei der die Parallelkapazität $C_U(\omega1)$ gegen Unendlich geht, und $Z(\omega2)$ die Impedanz ist, bei der die Parallelkapazität $C_U(\omega2)$ gegen Null geht.

8.  Verfahren nach einem der vorstehenden Ansprüche, wobei Wechselspannung $U(\omega)$ frei von Gleichspannungsanteilen ist und eine Frequenz von 0,1 Hz oder mehr aufweist.

9.  Verfahren nach einem der vorstehenden Ansprüche, wobei das Prüfobjekt ausgewählt ist aus Druckbehältern und Druckleitungen.

**10.** Vorrichtung (100) zur Bestimmung der Korrosionsgefährdung eines in Erdreich (220) gebetteten metallischen Prüfobjekts (200) mit Korrosionsschutzumhüllung (210), aufweisend:

Mittel A (110) zum Anlegen einer frequenzveränderlichen Wechselspannung U($\omega$) über eine Messstrecke zwischen Prüfobjekt (200) und dem das Prüfobjekt umgebendem Erdreich (220),
Mittel B (120) zum Ermitteln des der Messstrecke eingeprägten Stroms I($\omega$),
Mittel C (130) zum Ermitteln und Registrieren der Impedanz Z(w) der Messstrecke in Abhängigkeit von der Frequenz einer angelegten Wechselspannung U(w),
Mittel D (140) zum Ermitteln des ohmschen Serienwiderstands $R_U$ der Korrosionsschutzumhüllung aus der registrierten Impedanz Z(w) und
Mittel E (150) zur grafischen Analyse der Ortskurvenfunktion der registrierten Impedanz Z(w),

wobei die Vorrichtung derart ausgebildet ist, dass die Beurteilung der Korrosionsschutzumhüllung und der Korrosionsgefährdung des Prüfobjekts nach der folgenden Maßgabe ausgeführt wird:

- bei Erfüllung sowohl des ersten Prüfkriteriums ($R_U > R_U$min) als auch des zweiten Prüfkriteriums (keine Anomalie der Ortskurve) wird die Korrosionsschutzumhüllung des Prüfobjekts als intakt und das Prüfobjekt als nicht korrosionsgefährdet eingestuft;
- bei Erfüllung des ersten Prüfkriteriums ($R_U > R_U$min) aber Nichterfüllung des zweiten Prüfkriteriums (vorhandene Anomalie der Ortskurve) wird die Korrosionsschutzumhüllung als potentiell fehlerhaft und das Prüfobjekt als bedingt korrosionsgefährdet eingestuft;
- bei Nichterfüllung des ersten Prüfkriteriums ($R_U \leq R_U$min) aber Erfüllung des zweiten Prüfkriteriums (keine Anomalie der Ortskurve) wird die Korrosionsschutzumhüllung als bedingt intakt und das Prüfobjekt als bedingt korrosionsgefährdet eingestuft; und
- bei Nichterfüllung sowohl des ersten Prüfkriteriums ($R_U \leq R_U$min) als auch des zweiten Prüfkriteriums (vorhandene Anomalie der Ortkurve Z($\omega$)) wird die Korrosionsschutzumhüllung als fehlerhaft und das Prüfobjekt als korrosionsgefährdet eingestuft.

**Claims**

**1.** A method for determining the risk of corrosion of a metallic test object which is embedded in the earth and provided with a corrosion protection mantle, the method including the steps of:

a) applying an alternating voltage U($\omega$) that is variable in frequency across a measuring section formed by the test object and the earth surrounding the test object;
b) determining the electric current I($\omega$) thereby impressed on the measuring section;
c) determining and registering the impedance of the measuring section as a function of the frequency of the applied alternating voltage U($\omega$);
d) determining the ohmic series resistance $R_U$ of the corrosion protection mantle of the test object based on the impedance characteristics Z($\omega$) as a first test criterion, wherein the downward violation of a predefined limit value $R_U$min indicates a potentially defective corrosion protection mantle and a potential risk of corrosion of the test object; and
e) comparing the impedance characteristics Z($\omega$) with a predefined impedance characteristics of an ideal test object with a faultless corrosion protection mantle, wherein at least one graphical deviation (anomaly) of the impedance characteristics Z($\omega$) from the standard impedance characteristics as a second test criterion indicates a potentially defective corrosion protection mantle and a potential risk of corrosion of the test object; and
f) evaluating the corrosion protection mantle and the potential risk of corrosion of the test object according to the following requirement:

f1) if both the first test criterion ($R_U > R_U$min) and the second test criterion (no anomaly of the response locus) are satisfied, the corrosion protection mantle of the test object is classified as being faultless and the test object as being not in risk of corrosion;
f2) if the first test criterion ($R_U > R_U$min) is satisfied but the second test criterion (existing anomaly of the response locus) is not, the corrosion protection mantle is classified as being potentially defective and the test object as being in risk of corrosion to a limited extent;
f3) if the first test criterion ($R_U \leq R_U$min) is not satisfied but the second test criterion (no anomaly of the response locus) is, the corrosion protection mantle is classified as being faultless to a limited extent and the test object as being in risk of corrosion to a limited extent; and

f4) if both the first test criterion ($R_U \leq R_U$min) and the second test criterion (existing anomaly of the response locus $Z(\omega)$)) are not satisfied, the corrosion protection mantle is classified as being defective and the test object as being in risk of corrosion.

2. The method according to claim 1, wherein the graphical deviation is selected from the additional inflection point and the local minimum or maximum of the impedance characteristics.

3. The method according to claim 1 or 2, wherein the impedance characteristics $Z(\omega)$ is represented by plotting the real contents Re(Z) and the imaginary contents F(Z) of the impedance in the form of a response locus.

4. The method according to any one of the preceding claims, wherein, in the event of f2) or f3), an evaluation of the risk of corrosion is subsequently made on the basis of the Test Directives TRB 601 with the determining factors selected from the specific soil resistance, the homogeneity of the ground as well as the off-potential and the incoming current in a feed measurement taken into account, wherein index numbers are assigned to each of the determining factors, wherein the test object is classified as being not in risk of corrosion if the sum total of the index numbers is less than 18 and the test object is classified as being in risk of corrosion if the sum total of the index numbers is 18 or in excess thereof.

5. The method according to any one of the preceding claims, wherein the alternating voltage $U(\omega)$ is applied across at least one metallic conductive contact on the test object and at least one ground electrode (ground rod) placed in the earth in the environment of the test object.

6. The method according to any one of the preceding claims, wherein the series resistance of the corrosion protection mantle $R_U$ is determined using the equivalent electric circuit diagram of an ideal test object having a faultless corrosion protection mantle based on the impedance values $Z(\omega)$ and according to the following equation:

$$Z(\omega) = R_E + (R_U \| C_U)$$

wherein $Z(\omega)$ is the determined impedance value of the real measuring section, $R_E$ is the ohmic series resistance in the earth all the way to the corrosion protection mantle of the test object, $R\omega$ is the ohmic insulation resistance of the corrosion protection mantle, and $R_U$ is the capacitance of the ideal corrosion protection mantle of the test object, said capacitance being parallel to $R_U$.

7. The method according to any one of the preceding claims, wherein $R_U$ is graphically determined from the response locus of the impedance $Z(\omega)$, wherein $R_U$ corresponds to the absolute value of the difference between the impedance values $Z(\omega1)$ and $Z(\omega2)$, wherein $Z(\omega1)$ is the impedance where the parallel capacitance $C_U(\omega1)$ goes to infinity and $Z(\omega2)$ is the impedance where the parallel capacitance $C_U(\omega2)$ goes to zero.

8. The method according to any one of the preceding claims, wherein the alternating voltage $U(\omega)$ is free from any direct voltage contents and has a frequency of 0.1 Hz or higher.

9. The method according to any one of the preceding claims, wherein the test object is selected from pressure containers and pressure lines.

10. A device (100) for determining the risk of corrosion of a metallic test object (200) which is embedded in the earth (220) and provided with a corrosion protection mantle (210), comprising:

means A (110) for applying an alternating voltage $U(\omega)$ that is variable in frequency across a measuring section between the test object (200) and the earth (220) surrounding the test object;
means B (120) for determining the electric current $I(\omega)$ impressed on the measuring section;
means C (130) for determining and registering the impedance $Z(\omega)$ of the measuring section as a function of the frequency of the applied alternating voltage $U(\omega)$;
means D (140) for determining the ohmic series resistance $R_U$ of the corrosion protection mantle based on the impedance characteristics $Z(\omega)$; and
means E (150) for graphically analyzing the response locus function of the registered impedance $Z(\omega)$,

wherein the device is configured in such a manner that the evaluation of the corrosion protection mantle and the risk of corrosion of the test object is made according to the following requirement:

- if both the first test criterion ($R_U > R_U$min) and the second test criterion (no anomaly of the response locus) are satisfied, the corrosion protection mantle of the test object is classified as being faultless and the test object as being not in risk of corrosion;
- if the first test criterion ($R_U > R_U$min) is satisfied but the second test criterion (existing anomaly of the response locus) is not, the corrosion protection mantle is classified as being potentially defective and the test object as being in risk of corrosion to a limited extent;
- if the first test criterion ($R_U \leq R_U$min) is not satisfied but the second test criterion (no anomaly of the response locus) is, the corrosion protection mantle is classified as being faultless to a limited extent and the test object as being in risk of corrosion to a limited extent; and
- if both the first test criterion ($R_U \leq R_U$min) and the second test criterion (existing anomaly of the response locus $Z(\omega)$) are not satisfied, the corrosion protection mantle is classified as being defective and the test object as being in risk of corrosion.

**Revendications**

1. Procédé de détermination du risque de corrosion d'un objet d'essai métallique encastré dans de la terre avec une enveloppe de protection contre la corrosion, contenant les étapes de :

   a) application d'une tension alternative à fréquence variable $U(\omega)$ par le biais d'un trajet de mesure formé par l'objet d'essai et la terre entourant l'objet d'essai ;
   b) détermination du courant $I(\omega)$ appliqué de ce fait au trajet de mesure ;
   c) détermination et enregistrement de l'impédance du trajet de mesure en fonction de la fréquence de la tension alternative appliquée $U(\omega)$ ;
   d) détermination de la résistance ohmique en série $R_u$ de l'enveloppe de protection contre la corrosion de l'objet d'essai à partir du tracé d'impédance $Z(\omega)$ comme premier critère d'essai, dans lequel le dépassement par le bas d'une valeur limite prédéterminée $R_u$min indique une enveloppe de protection contre la corrosion éventuellement défectueuse et un éventuel risque de corrosion de l'objet d'essai et
   e) comparaison du tracé d'impédance $Z(\omega)$ à un tracé d'impédance prédéterminé d'un objet d'essai idéal avec une enveloppe de protection contre la corrosion intacte, dans lequel au moins un écart graphique (anomalie) du tracé d'impédance $Z(\omega)$ par rapport au tracé d'impédance standardisé comme second critère d'essai indique une enveloppe de protection contre la corrosion éventuellement défectueuse et un éventuel risque de corrosion de l'objet d'essai et
   f) évaluation de l'enveloppe de protection contre la corrosion et du risque de corrosion de l'objet d'essai conformément à ce qui suit :

   f1) en cas de satisfaction aussi bien du premier critère d'essai ($R_u > R_u$min) que du second critère d'essai (aucune anomalie de la courbe locale), l'enveloppe de protection contre la corrosion de l'objet d'essai est classée comme intacte et l'objet d'essai comme sans risque de corrosion ;
   f2) en cas de satisfaction du premier critère d'essai ($R_u > R_u$min) mais de non satisfaction du second critère d'essai (anomalie existante de la courbe locale), l'enveloppe de protection contre la corrosion est classée comme éventuellement défectueuse et l'objet d'essai comme à risque de corrosion sous condition ;
   f3) en cas de non satisfaction du premier critère d'essai ($R_u \leq R_u$min) mais de satisfaction du second critère d'essai (aucune anomalie de la courbe locale), l'enveloppe de protection contre la corrosion est classée comme intacte sous condition et l'objet d'essai comme à risque de corrosion sous condition ; et
   f4) en cas de non satisfaction aussi bien du premier critère d'essai ($R_u \leq R_u$min) que du second critère d'essai (anomalie existante de la courbe locale $Z(\omega)$), l'enveloppe de protection contre la corrosion est classée comme défectueuse et l'objet d'essai comme à risque de corrosion.

2. Procédé selon la revendication 1, dans lequel l'écart graphique est sélectionné parmi un point d'inflexion supplémentaire et un minimum ou maximum local du tracé d'impédance.

3. Procédé selon la revendication 1 ou 2, dans lequel le tracé d'impédance $Z(\omega)$ est représenté par l'application des parties réelles Re(Z) et des parties imaginaires F(Z) de l'impédance sous forme d'une courbe locale.

**4.** Procédé selon l'une quelconque des revendications précédentes, dans lequel, dans le cas de f2) ou f3), une estimation du risque de corrosion est effectuée à la suite sur le modèle des directives de contrôle TRB 601 en tenant compte des grandeurs d'influence, sélectionnées parmi : résistance spécifique du sol, homogénéité du sol ainsi que potentiel de coupure et courant d'alimentation dans le cas d'une mesure d'alimentation, dans lequel des nombres caractéristiques sont à chaque fois associés aux grandeurs d'influence, dans lequel, dans le cas de la somme des nombres caractéristiques inférieure à 18, l'objet d'essai est classé comme sans risque de corrosion et dans le cas de la somme des nombres caractéristiques de 18 ou plus, l'objet d'essai est classé comme à risque de corrosion.

**5.** Procédé selon l'une quelconque des revendications précédentes, dans lequel la tension alternative U($\omega$) est appliquée entre au moins un contact conducteur métallique sur l'objet d'essai et au moins une électrode de mise à la terre (perche de mise à la terre) placée dans l'environnement de l'objet d'essai dans la terre.

**6.** Procédé selon l'une quelconque des revendications précédentes, dans lequel la résistance en série de l'enveloppe de protection contre la corrosion $R_u$ est déterminée par le biais du schéma de câblage de remplacement d'un objet d'essai idéal avec une enveloppe de protection contre la corrosion intacte à partir des valeurs d'impédance Z($\omega$) selon :

$$Z(\omega) = R_E + (R_U \| C_U)$$

dans laquelle Z($\omega$) = valeur d'impédance déterminée du trajet de mesure réel, $R_E$ = résistance ohmique en série dans la terre jusqu'à l'enveloppe de protection contre la corrosion de l'objet d'essai, $R_u$ = résistance ohmique d'isolation de l'enveloppe de protection contre la corrosion et $C_u$ = la capacité parallèle à $R_u$ de l'enveloppe de protection contre la corrosion idéale de l'objet d'essai.

**7.** Procédé selon l'une quelconque des revendications précédentes, dans lequel $R_u$ est déterminé graphiquement à partir de la courbe locale de l'impédance Z($\omega$), dans lequel $R_u$ correspond au montant de la différence des valeurs d'impédance Z($\omega$1) et Z($\omega$2), dans lequel Z($\omega$1) est l'impédance pour laquelle la capacité parallèle $C_u$($\omega$1) tend vers l'infini et Z($\omega$2) est l'impédance pour laquelle la capacité parallèle $C_u$($\omega$2) tend vers zéro.

**8.** Procédé selon l'une quelconque des revendications précédentes, dans lequel la tension alternative U($\omega$) est exempte de parties de tension continue et présente une fréquence de 0,1 Hz ou plus.

**9.** Procédé selon l'une quelconque des revendications précédentes, dans lequel l'objet d'essai est sélectionné parmi des récipients sous pression et des conduites sous pression.

**10.** Dispositif (100) de détermination du risque de corrosion d'un objet d'essai métallique (200) encastré dans de la terre (220) avec une enveloppe de protection contre la corrosion (210), présentant :

des moyens A (110) pour l'application d'une tension alternative à fréquence variable U($\omega$) par le biais d'un trajet de mesure entre l'objet d'essai (200) et la terre (220) entourant l'objet d'essai,
des moyens B (120) pour la détermination du courant I($\omega$) appliqué au trajet de mesure,
des moyens C (130) pour la détermination et l'enregistrement de l'impédance Z($\omega$) du trajet de mesure en fonction de la fréquence d'une tension alternative appliquée U($\omega$),
des moyens D (140) pour la détermination de la résistance ohmique en série $R_u$ de l'enveloppe de protection contre la corrosion à partir de l'impédance enregistrée Z($\omega$) et
des moyens E (150) pour l'analyse graphique de la fonction de courbe locale de l'impédance enregistrée Z($\omega$),

dans lequel le dispositif est réalisé de telle sorte que l'évaluation de l'enveloppe de protection contre la corrosion et du risque de corrosion de l'objet d'essai est effectuée conformément à ce qui suit :

- en cas de satisfaction aussi bien du premier critère d'essai ($R_u$ > $R_u$min) que du second critère d'essai (aucune anomalie de la courbe locale), l'enveloppe de protection contre la corrosion de l'objet d'essai est classée comme intacte et l'objet d'essai comme sans risque de corrosion ;
- en cas de satisfaction du premier critère d'essai ($R_u$ > $R_u$min) mais de non satisfaction du second critère d'essai (anomalie existante de la courbe locale), l'enveloppe de protection contre la corrosion est classée comme éventuellement défectueuse et l'objet d'essai comme à risque de corrosion sous condition ;

- en cas de non satisfaction du premier critère d'essai ($R_u \leq R_u min$) mais de satisfaction du second critère d'essai (aucune anomalie de la courbe locale), l'enveloppe de protection contre la corrosion est classée comme intacte sous condition et l'objet d'essai comme à risque de corrosion sous condition ; et

- en cas de non satisfaction aussi bien du premier critère d'essai ($R_u \leq R_u min$) que du second critère d'essai (anomalie existante de la courbe locale $Z(\omega)$), l'enveloppe de protection contre la corrosion est classée comme défectueuse et l'objet d'essai comme à risque de corrosion.

**Fig. 1**

**Fig. 2**

Fig. 3

Fig. 4

Fig. 5

Fig. 6

Fig. 7

Fig. 8A

Fig. 8B

**IN DER BESCHREIBUNG AUFGEFÜHRTE DOKUMENTE**

**In der Beschreibung aufgeführte Patentdokumente**

- US 5674375 A
- EP 0465347 A1
- WO 02103330 A1


**In der Beschreibung aufgeführte Nicht-Patentliteratur**

- **N.D. KOGGER et al.** *An introduction to electrochemical impedanz measurement,* 01. Mai 1999
- **BARADELL O. et al.** *Comparison of corrosion rates evaluated from polarisation resistance and electrochemical impedanz spectroscopy measurements,* 01. Januar 1994, 8, 1-810